# EUROPÄISCHE PATENTANMELDUNG

(11) **EP 0 642 816 A1**
(43) Veröffentlichungstag der Anmeldung: **15.03.1995**
(21) Anmeldenummer: 93114385.3
(22) Anmeldetag: 08.09.1993
(51) Int. Cl.: B01D 3/08, B01L 9/04

(54) **Destillationsvorrichtung, insbesondere Rotationsverdampfer**

(71) Anmelder: RESONA INNOVATION AG, CH-9202 Gossau (CH)
(72) Erfinder: Zellweger, Adolf, CH-9202 Gossau (CH)
(74) Vertreter: Göbel, Matthias, Dipl.-Ing.

(57) **Zusammenfassung**

Bei einer Destillationsvorrichtung, insbesondere Rotationsverdampfer mit einem Heizbad für einen mit einem motorischen Rotationsantrieb koppelbaren Verdampferkolben, einem Kühler, mindestens einem Auffangkolben für das Destillat sowie mit Schutzvorrichtungen für die gläsernen Bauelemente und das Heizbad, ist zu sicheren Benutzungen und Energieeinsparungen die Anordnung eines vollumfänglich geschlossenen Aufnahmegehäuses (1) für Heizbad (4), Verdampferkolben (3), Kühler, Auffangkolben sowie dem Rotationsantrieb (2) und der Ausbildung von dem Heizbad (4), Verdampferkolben (3), Kühler und Auffangkolben zugeordneten Teilbereichen des Aufnahmegehäuses (1) vorgesehen, die zur Erzielung von Bedienöffnungen (5) verschwenk- und/oder verschieb- und/oder steckbar am Aufnahmegehäuse (1) angeordnet sind.

## Beschreibung

Die Erfindung betrifft eine Destillationsvorrichtung, insbesondere Rotationsverdampfer mit einem Heizbad für einen mit einem motorischen Rotationsantrieb koppelbaren Verdampferkolben, einem Kühler, mindestens einem Auffangkolben für das Destillat sowie mit Schutzvorrichtungen für die gläsernen Bauelemente und das Heizbad.

Bekanntlich ist der Benutzer von Rotationsverdampfern Gefahren ausgesetzt, die z.B. durch Bersten des Verdampferkolbens, abgeschleuderten Glasteilen und Flüssigkeiten oder Ex- bzw. Implosionen von Glasteilen sowie Abschwappen von Flüssigkeiten, herrühren. Außerdem erfolgen häufig unbeabsichtigte Berührungen des frei zugänglichen Heizbades oder Heizbadbehälters, die zu Verletzungen beim Benutzer führen. Fernerhin stellen sich bei den bekannten Rotationsverdampfern durch die offene Anordnung von Heizbad und Verdampferkolben nachteilige Wärmeverluste ein. Es ist zwar bei einem Rotationsverdampfer (EP 0 303 637) versucht worden, durch Zuordnung beweglicher Schutzelemente zu den Glasteilen und dem Heizbad die Benutzung des Rotationsverdampfers sicherer zu machen. Die Schutzwirkung dieser Schutzelemente ist jedoch nicht in jeder Situation und für großvolumige Kolben nicht sicher übertragbar.

Es ist Aufgabe der Erfindung die Benutzung von Rotationsverdampfern sicher zu machen und das Händling zu verbessern sowie Maßnahmen zu Energieeinsparungen zu schaffen.

Erfindungsgemäß ist diese Aufgabe gelöst durch die Anordnung eines vollumfänglich geschlossenen Aufnahmegehäuses für Heizbad, Verdampferkolben, Kühler Auffangkolben sowie dem Rotationsantrieb und der Ausbildung von dem Heizbad, Verdampferkolben, Kühler und Auffangkolben zugeordneten Teilbereichen des Aufnahmegehäuses, die zur Erzielung von Bedienöffnungen verschwenk- und/oder verschieb- und/oder steckbar am Aufnahmegehäuse angeordnet sind. Vermittels des so allseitig geschlossenen Aufnahmegehäuses werden mögliche Gefahren in einfacher Weise vom Benutzer ferngehalten. Dabei werden über die Dauer von Benutzungsvorgängen insbesondere unbeabsichtigte Berührungen des Heizbades bzw. Heizmediums oder des Verdampferkolbens verhindert. Durch die gekapselte Ausführung des Aufnahmegehäuses ist auch der Rotationsantrieb für den Verdampferkolben abgedeckt, wodurch der Benutzer gegenüber den rotierenden Teilen desselben, wie Verschraubungsflansch, geschützt ist. Dadurch ist ein Erfassen von Körperteilen oder Kleidungsstücken des Benutzers, insbesondere der Haare durch rotierende Teile ausgeschlossen. Schließlich sorgt die geschlossene Gehäuseausbildung auch dafür, daß Wasser-/Dampfabscheidungen bzw. Kondensationen weitgehend im Inneren des Aufnahmegehäuses verbleiben, wodurch Wasserdampfabgaben an den Aufstellraum unterbleiben oder minimiert sind. Letztlich sorgt die geschlossene Gehäuseausbildung aber auch für eine Einengung des Raumes oberhalb des Heizbades, wodurch die aufzubringende Wärme gering gehalten werden kann, was zu einer Einsparung an Heizenergie führt. Gleichzeitig besteht die Möglichkeit die Thermostatisierung des Heizbades bzw. dessen Regelung zu erleichtern und zu verbessern. Außerdem können einwandige Heizbäder zum Einsatz kommen und Isolierungen des Heizbades entfallen.

In Ausgestaltung der Vorrichtung ist vorgesehen, daß der Verdampferkolben und das Heizbad gemeinsam durch eine einen Teilbereich des Aufnahmegehäuses bildende Haube übergriffen sind und daß die Haube vermittels Scharniergelenken od. dgl. schwenkbeweglich am Aufnahmegehäuse angeordnet ist. Es versteht sich, daß die Haube auch in beliebig anderer Weise, z.B. lose aufstellbar mit dem Aufnahmegehäuse verbunden sein kann. Als Zweckmäßig hat sich gezeigt, die Haube mit einem als Sichtfenster dienenden durchsichtigen Abschnitt, z.B. einen ebenen oder gekrümmten Körper aus Glas oder Kunststoff zu versehen. Über das so gebildete Fenster läßt sich der Verdampferkolben und das Heizbad für den Benutzer ungefährdet von außen beobachten und kontrollieren. Die Beobachtungsvorgänge lassen sich dabei noch erleichtern, wenn dem durchsichtigen Abschnitt ein manuell oder motorisch verschwenkbarer Wischer als Reinigungselement zugeordnet ist.

Weiter ist vorgesehen, die Haube mit einem als manuelles Betätigungsglied dienenden Handgriff auszurüsten. Es versteht sich, daß die Haube auch mittels eines elektromotorischen Antriebs aus der Abdeckstellung in die Offenstellung und umgekehrt überführt werden kann. Die Anordnung von manuellen Betätigungselementen oder elektromotorischen Antrieben an den übrigen verschwenk- und/oder verschieb- und/oder steckbaren Teilbereichen des Aufnahmegehäuses ist ebenso vorgesehen.

Nach weiterer Ausgestaltung können die dem Kühler und Auffangkolben zugeordneten Teilbereiche des Aufnahmegehäuses entweder getrennt unabhängig voneinander oder aber gemeinsam gleichzeitig verschwenk- und/oder verschiebbar und/oder steckbar am Aufnahmegehäuse ausgebildet sein. Bei getrennter Bewegungsmöglichkeit dieser Teilbereiche sind die dahinter befindlichen Bauelemente der Vorrichtung unabhängig anderer Bauelemente einsehbar bzw. zugänglich, während bei gemeinsamer Betätigung der Teilbereiche sämtliche zugeordneten Bauelemente gleichzeitig zugänglich sind, wobei das Heizbad in der Ruheposition in den festen Teil des Gehäuses verbringbar ist, so daß ein Berühren des Heizbades ausgeschlossen werden kann.

Fernerhin ist vorgesehen, das Heizbad vertikal zwischen einer oberen Arbeitsstellung und einer unteren Ruhestellung unabhängig der Stellungen oder den Bewegungen der Haube bewegbar auszubilden. Auch ist vorgesehen, das Heizbad mit der Haube zu koppeln dergestalt, daß bei geschlossener Haube das Heizbad jeweils selbsttätig die obere Arbeitsstellung und bei geöffneter Haube die untere Ruhestellung einnimmt. Die Kopplung von Heizbad und Haube trägt zur Erhöhung der Benutzersicherheit bei, da sich beim Öffnen der Haube das Heizbad selbsttätig in die abgesenkte, gegen Berührungen unzugängliche Stellung bewegt.

Zweckmäßig ist das Aufnahmegehäuse innen mindestens über Teilabschnitte mit einer Auflage, Beschichtung od.dgl. aus einem Isolierwerkstoff versehen. Die Auflage sorgt vorteilhaft für Energieeinsparungen und verhindert störende Aufheizungen des Aufnahmegehäuses. Bevorzugt ist das Aufnahmegehäuse aus einem undurchsichtigen metallischen Werkstoff oder einem Kunststoff bildbar, während die verschwenk- und/oder verschieb- und/oder steckbaren Gehäuseteilbereiche mindestens teilweise aus einem durchsichtigen Werkstoff, z.B. einem Kunststoff oder Glas, gebildet sind. Letztlich ist noch von Vorteil, wenn das Aufnahmegehäuse eine Not-Aus-Abschaltlogik aufweist, die bei offenem oder geschlossenem Aufnahmgehäuse von außen gefahrlos betätigbar ist.

Die Erfindung ist anhand eines Ausführungsbeispiels in der Zeichnung verdeutlicht. Es zeigen:
- Fig. 1: einen Vakuumverdampfer mit einem umfänglich geschlossenen Aufnahmegehäuse, perspektivisch und
- Fig. 2: einen Vakuumverdampfer gemäß Fig. 1 mit einem offenen Teilbereich des Aufnahmegehäuses, perspektivisch.

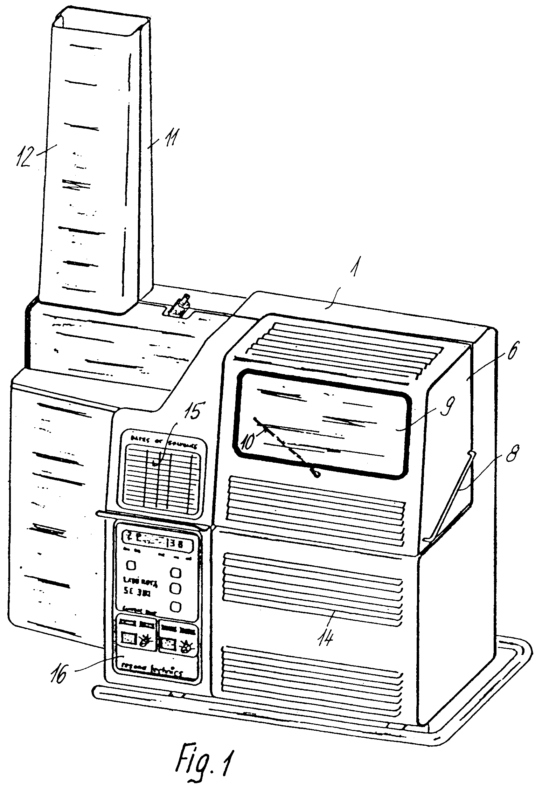

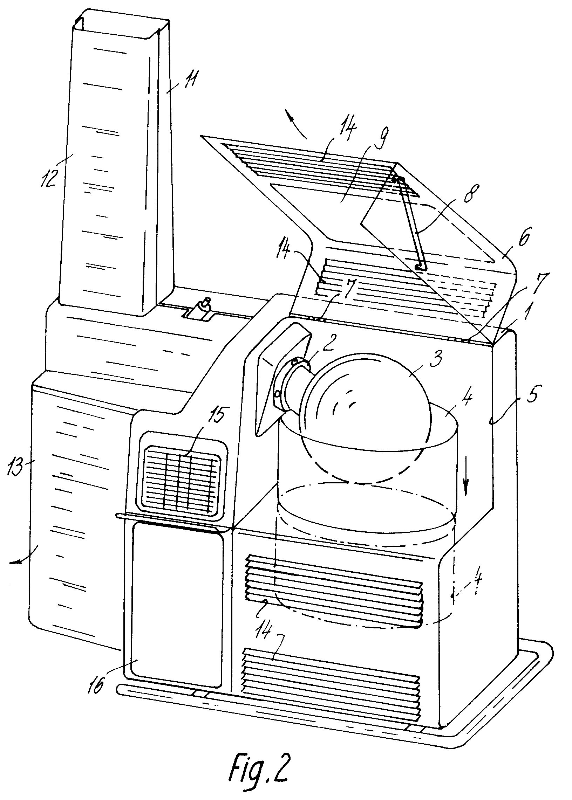

In den Figuren ist mit 1 ein Aufnahmegehäuse für einen vermittels eines Rotationsantriebs 2 drehbaren Verdampferkolben 3 bezeichnet, dem ein Heizbad 4 in bekannter Weise zugeordnet ist. Das Aufnahmegehäuse 1 dient weiterhin der gekapselten Unterbringung eines Kühlers und Aufnahmekolbens für das Destillat (nicht gezeigt). Beim Ausführungsbeispiel ist das Heizbad 4 in der Vertikalen bewegbar im Aufnahmegehäuse 1 ausgebildet. Dem Verdampferkolben 3 und Heizbad 4 ist im Aufnahmegehäuse 1 eine Bedienöffnung 5 zugeordnet, die durch eine als Abdeckung für Verdampferkolben und Heizbad dienende Haube 6 verschließbar ist. Die Haube 6 ist hierzu durch Scharniergelenke 7 verschwenkbar mit dem Aufnahmegehäuse 1 verbunden, so daß die Haube 6 wahlweise aus der in Fig. 1 gezeigten Schließstellung in die Offenstellung der Fig. 2 abklappbar ist. Die Handhabung der Haube 6 ist durch einen an der Haube 6 angeordneten Handgriff 8 erleichtert. Zur Beobachtung von Verdampferkolben 3 und Heizbad bei in Schließstellung befindlicher Haube 6 (Fig. 1) weist diese ein Fenster 9 auf, dem ein als Reinigungselement dienender Wischer 10 zugeordnet ist.

In einem turmartigen Fortsatz 11 des Aufnahmegehäuses 1 erstreckt sich der Kühler des Rotationsverdampfers, der durch einen Teilbereich 12 des Aufnahmegehäuses 1 abgedeckt ist. Desweiteren findet ein Teilbereich 13 Anwendung, der den Auffangkolben für das Destillat abdeckt. Die beiden Teilbereiche 12,13 sind beliebig, z.B. verschwenkbar, verschiebbar oder steckbar mit dem Aufnahmegehäuse 1 verbunden. In der Haube 6 und dem das Heizbad 4 aufnehmenden Teil des Aufnahmegehäuses 1 sind Schlitzungen 14 vorgesehen, über die, z.B. ein Luft-Dampfaustausch, erfolgen kann.

Beim Ausführungsbeispiel ist das Heizbad 4, wie in Fig. 2 erkennbar, wahlweise in eine obere oder untere Stellung verbringbar. Hierbei kann, wie dargestellt das Heizbad 4 unabhängig der Bewegungen der Haube 6 verschiebbar sein. Es ist auch möglich, das Heizbad 4 mit der Haube 6 zu koppeln dergestalt, daß bei Öffnungsbewegungen der Haube 6 eine selbsttätige Absenkung des Heizbades 4 in die untere Ruhestellung erfolgt, wodurch der Benutzer des Rotationsverdampfers an einem unbeabsichtigten Berühren des Heizbades 4 gehindert ist. Mit 15 ist ein Träger für Anzeigeelemente und mit 16 ein Träger für Bedienelemente bezeichnet.

## Patentansprüche

1. Destillationsvorrichtung, insbesondere Rotationsverdampfer mit einem Heizbad für einen mit einem motorischen Rotationsantrieb koppelbaren Verdampferkolben, einem Kühler, mindestens einem Auffangkolben für das Destillat sowie mit Schutzvorrichtungen für die gläsernen Bauelemente und das Heizbad, gekennzeichnet durch die Anordnung eines vollumfänglich geschlossenen Aufnahmegehäuses (1) für Heizbad (4), Verdampferkolben (3), Kühler, Auffangkolben sowie dem Rotationsantrieb (2) und der Ausbildung von dem Heizbad (4), Verdampferkolben (3), Kühler und Auffangkolben zugeordneten Teilbereichen des Aufnahmegehäuses (1), die zur Erzielung von Bedienöffnungen (5) verschwenk- und/oder verschieb- und/oder steckbar am Aufnahmegehäuse (1) angeordnet sind.

2. Vorrichtung nach Anspruch 1, dadurch gekennzeichnet, daß der Verdampferkolben (3) und das Heizbad (4) gemeinsam durch eine einen Teilbereich des Aufnahmegehäuses (1) bildende Haube (6) übergriffen sind und daß die Haube (6) vermittels Scharniergelenken (7) schwenkbeweglich am Aufnahmegehäuse (1) angeordnet ist.

3. Vorrichtung nach Anspruch 2, dadurch gekennzeichnet, daß die Haube (6) einen als Sichtfenster dienenden durchsichtigen Abschnitt (9), z.B. einen ebenen oder gekrümmten Körper aus Glas oder Kunststoff, aufweist.

4. Vorrichtung nach Anspruch 3, dadurch gekennzeichnet, daß der durchsichtige Abschnitt (9) der Haube (6) ein auf diesem manuell oder motorisch verschwenkbares Wischelement (10) aufweist.

5. Vorrichtung nach Anspruch 2, dadurch gekennzeichnet, daß die Haube (6) mindestens einen als manuelles Betätigungselement dienenden Handgriff (8) aufweist.

6. Vorrichtung nach Anspruch 2, dadurch gekennzeichnet, daß die Haube (6) durch einen elektromotorischen Antrieb aus der Abdeckstellung in die Offenstellung und umgekehrt bewegbar ist.

7. Vorrichtung nach Anspruch 1, dadurch gekennzeichnet, daß die dem Kühler und Auffangkolben des Rotationsverdampfers zugeordneten Teilbereiche (12,13) des Aufnahmegehäuses (1) getrennt unabhängig voneinander oder gemeinsam gleichzeitig verschwenk- und/oder verschiebbar und/oder steckbar am Aufnahmegehäuse (1) angeordnet sind.

8. Vorrichtung nach Anspruch 1, dadurch gekennzeichnet, daß das Heizbad (4) vertikal zwischen einer oberen Arbeitsstellung und einer unteren Ruhestellung unabhängig der Stellungen der Haube (6) bewegbar ist und das Heizad in der Ruhestellung in den festen Teil des Gehäuses einfahrbar ist.

9. Vorrichtung nach Anspruch 8, dadurch gekennzeichnet, daß das Heizbad (4) mit der Haube (6) gekoppelt ist und daß bei geschlossener Haube (6) das Heizbad selbsttätig in die Arbeitsstellung und bei geöffneter Haube in die Ruhestellung überführbar ist.

10. Vorrichtung nach Anspruch 1, dadurch gekennzeichnet, daß das Aufnahmegehäuse (1) mindestens über Teilabschnitte innen eine Auflage, Beschichtung od.dgl. aus einem Isolierwerkstoff aufweist.

11. Vorrichtung nach Anspruch 1, dadurch gekennzeichnet, daß das Aufnahmegehäuse (1) aus einem undurchsichtigen, z.B. metallischen Werkstoff oder Kunststoff gebildet ist.

12. Vorrichtung nach Anspruch 1, dadurch gekennzeichnet, daß die verschwenk- und/oder verschieb- und/oder steckbaren Gehäuseteilbereiche (6,12,13) mindestens teilweise aus einem durchsichtigen Werkstoff, z.B. einem Kunststoff oder Glas, gebildet sind.

13. Vorrichtung nach Anspruch 1, dadurch gekennzeichnet, daß das Aufnahmegehäuse (1) eine Not-Aus-Abschaltlogik aufweist und daß die Not-Aus-Abschaltlogik bei offenem oder geschlossenem Aufnahmegehäuse von außen betätigbar ist.
